Europäisches Patentamt

(19) European Patent Office

Office européen des brevets

(11) Publication number: **0 067 643**

**A2**

# (12) EUROPEAN PATENT APPLICATION

(21) Application number: **82302938.4**

(22) Date of filing: **08.06.82**

(51) Int. Cl.³: **G 01 B 7/00**
**G 01 B 7/28**

(30) Priority: **12.06.81 GB 8118226**
**20.10.81 GB 8131599**

(43) Date of publication of application:
**22.12.82 Bulletin 82/51**

(84) Designated Contracting States:
**DE FR GB**

(71) Applicant: **Wolfendale, Peter Caleb Frederick**
**33 Pound Hill Great Brickhill**
**Milton Keynes, Bucks. MK17 9AS(GB)**

(72) Inventor: **Wolfendale, Peter Caleb Frederick**
**33 Pound Hill Great Brickhill**
**Milton Keynes, Bucks. MK17 9AS(GB)**

(74) Representative: **Cole, Paul Gilbert et al,**
**Hughes Clark Andrews & Byrne 63 Lincoln's Inn Fields**
**London WC2A 3JU(GB)**

(54) **Method for determining the dimensions and/or form of surfaces.**

(57) A non-contact method is provided for measuring the dimensions and form of an unknown surface by means of a transducer or sensor probe presented to the surface and determining the variations in capacity of electrical flux between said discrete capacitance electrode in the sensor and the adjacent unknown surface. To investigate the variations in the diameter and profile of a bore 33 a probe 30 having at least two angularly spaced capacitance electrodes 31 may be advanced along the axis of the bore and the capacitance values between each electrode and the adjoining surface measured. In another variant a single capacitative transducer probe may be moved over a surface to be measured. The probe may have an air supply duct discharging through one or more orifices adjacent the or each electrode to clean the unknown surface and (in the case of measurement within a bore) to provide a self-centering action.

FIG. 2

EP 0 067 643 A2

METHOD FOR DETERMINING THE DIMENSIONS AND/OR

FORM OF SURFACES

The present invention provides a non-contact method for measuring the dimensions and/or form of surfaces by means of capacitance transducers.

In capacitance transducers one or more electrodes are mounted so that each has an electrical capacitance to an (adjacent or) proximate electrode surface. The capacitance measured is a function of the distance of the electrode from the surface. In general $C = M.\frac{AK}{d}$ where C is the electrical capacitance between two parallel surfaces, area A separated by a distance d, k is the dielectric value of the ambient medium and M is a constant. If an electrode of known area A is held close to a surface, the separation of the electrode from the surface may be determined by measuring the electrical capacitance between the electrode and the surface. But capacitance transducers conventionally employ two electrode surfaces maintained in known spatial relationship.

The present invention is based on the concept of a non-contact method for measuring the dimensions and/or form of an unknown surface by means of a transducer or sensor probe presented to the surface and determining the variations in capacity or electrical flux between at least one discrete capacitance electrode in the transducer or sensor and the adjacent unknown surface wherein either sensor having one or more capacitance electrodes is scanned in two dimensions over the surface or a sensor having at least two electrodes is moved linearly passed the surface.

In some instances the body whose surface is measured may be a non-conductor in which case use is made of its dielectric properties. The surface of the body is interposed between the transducer or sensor and a conveniently placed electrode and variations in electrical flux due to the dielectric of the body may be measured.

The range of forms which the transducer or sensor may take is considerable. It may be round, square, rectangular or any convenient shape. Usually but not necessarily the active sensing elements or capacitative electrodes will be set in a carrier which allows the elements to be transported to the position where they can sense the surface under inspection with the required accuracy and resolution. The sensor assembly, that is the electrodes set in the carrier, may consist of sensing electrodes (each forms one capacitor plate), insulation to stop the electrode shorting to the carrier, a conductive carrier which is at an earth or some fixed potential so that all of the sensing electrodes and their connections etc., other than the required sensing surface are screened, and connections to the sensing electrodes which are led away to appropriate signal conditioning apparatus.

A preferred form of the transducer or sensor probe has one or more discrete capacitance electrodes in combination with an internal air supply duct that discharges air through orifices in the surface of the probe adjacent said electrode to clean the unknown surface. If the body of the probe is cylindrical and at least three said orifices are distributed around the circumference of said probe then the emerging air jets provide a self-centering action.

The nature of the electrode elements may vary considerably. They may be flush with the surface of the carrier or they may protrude or be recessed. They can be round, rectangular or any other convenient shape such as a section of a cylinder cut at an angle. The electrodes may be adjacent to each other, separated only by insulating material or they may be set in a conductor in such a way that one probe element is screened from another.

There are two main classes of measurement using this technique.

In a first case the sensing probe has a form or shape which approximates to the shape to be measured. The surface of the probe has multiple sensing elements. Any number may be present. By measuring the capacitance from each active element of the sensor to the surface which is being measured, the shape of the unknown surface may be determined, since the shape of the sensor array is known. Thus when a round cylindrical bore is to be measured, a sensor is made which is slightly under size to the bore. Enough electrodes are inserted in the surface to give the required information. The sensor is inserted, a set of readings made, the capacitance readings converted to distance. The size of the sensor is known and therefore the size of the cylindrical bore may be determined. There may be only two electrodes which are arranged at opposite ends of a diameter. Measuring first one gap and then the other will give the diameter at that one location. It is better to have four electrodes disposed circumferentially and spaced at $90^{\circ}$. One can then measure the diameter at two positions at right angles to each other which enables the ovality of the bore to be determined. Similarly six or eight electrodes would yield more information about the diameter and roundness cf the bore at that location and in particular would detect higher order lobing. If the bore to be measured is fairly long then it may be desirable to measure the diameter at several axially spaced places. So axially spaced groups of circumferentially disposed electrodes can be mounted on one sensor surface to give these data. There may be two groups of two electrodes measuring the diameter at two places or there may be any number of electrode groups disposed at axial intervals along the surface of the sensor. Measuring each gap in turn (or if desired simultaneously) allows the diameter, roundness, straightness and degree of taper of the bore to be determined.

The second method of operation involves moving a capacitative transducer probe over the surface to be measured so that the surface is sensed by the same electrode or group of electrodes. Thereby the shape of the surface may be determined from a series of measurements from the sensor rather than the one set of measurements from a static sensor. In this case it is necessry to control the movement of the probe or sensor in a known manner, the sensor is only the "fiducial" measuring element which senses small variations. The position of the probe or sensor must be measured by other means. The combination of the two measurements will then give the required shape of the profile. In one variant of this method a probe conforming to the shape of the test surface is traversed by a precision mechanism over the test surface. Thus a cylindrical probe having four electrodes can be traversed axially along a bore and at intervals along this traverse a series of groups of four readings are taken, one for each of the four electrodes disposed at $90^\circ$, and each repeated at a different axial position. In this way a profile of the bore diameter, roundness, straightness can be built up by storing and assembling the data in a suitable form such as a graphic representation. In another variant the sensor probe has a limited group of electrodes disposed in a two or three dimensional array. Such a probe can be moved by an appropriate traversing mechanism so as to have the required number of degrees of freedom. These may be in rectangular or polar coordinates and may additionally provide for one or more rotational motions.

For example a three dimensional measuring machine can have a movable probe having a spherical tip the surface of which is provided with a number of capacitative sensing elements. The three dimensional machine moves the probe until the capacitance between one or more of these sensing elements reaches a predetermined value, after which the probe is moved to explore the surface under test under the control of the three dimensional measuring machine so as to maintain a constant distance from the test surface. Since the distance between the probe and the surface is held constant, the profile of the object under measurement can be determined. In the last mentioned application the probe will generally be arranged to turn one face to the surface being sensed. The turning mechanism will be an auxiliary servo drive. However, other faces of the probe need to have sensing elements in case the probe enters an area too narrow, or approaches a sharp corner and auxiliary electrodes may be provided to sense when such a condition has occurred.

Various embodiments of the invention will now be described by way of example only with reference to the accompanying drawings in which:

Figures 1 and 1a are schematic side and end views of a probe for measuring the surface irregularities of a cylindrical bore;

Figure 2 shows the probe of Figure 1 gauging a bore slightly larger than itself;

Figure 3 is a diagrammatic section on the line A-A of Figure 2;

Figure 4 shows an electrode in the probe of Figures 1 and 2 moving past a step in the bore and Figure 4a is a graph of perceived capacitance against electrode position showing the actual response obtained;

Figure 5 shows the use of a cylindrical probe having two pairs of electrodes at 180° angular intervals spaced along the axis thereof;

Figures 6 and 7 are isometric and longitudinal sectional views respectively of a further embodiment of the probe;

Figure 8 illustrates the scanning of a surface by an electrode array;

Figures 9 and 9a show in side and end view respectively a further embodiment of a cylindrical probe;

Figure 10 shows the probe of Figures 9 and 9a gauging a bore of relatively large diameter;

Figure 11 shows a probe being traversed along a bore;

Figures 12 and 13 show the use of capacitative electrodes in conductive carriers to scan over surfaces;

Figures 14a-14e show spherical probes with various shapes and dispositions of capacitative electrodes thereon;

Figures 15-19 diagrammatically illustrate different electrode and probe constructions; and

Figures 20 and 21 illustrate capacitance measuring circuits.

DETERMINATION OF BORE PROFILES

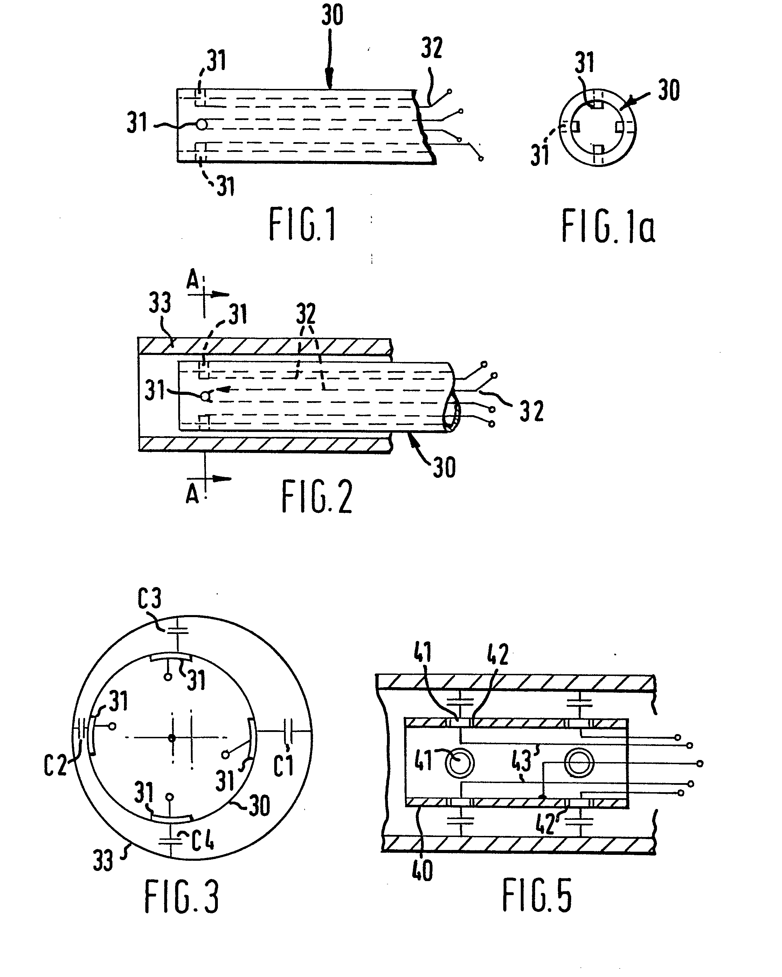

Figure 1 shows a transducer which is intended for measurements using a probe whose surface is in a fixed attitude relative to the surface being measured and need not be moved when the surface measurement is made. In this instance a probe 30 which is a hollow cylindrical body of insulating material is being advanced axially into a hollow cylinder 33 (Figures 2 and 3) only slightly larger than itself. The geometry of the cylinder is monitored by bringing the probe into the proximity of the inner surface of cylinder 33 and measuring the capacitance between the inner surface of the cylinder and capacitative electrodes 31 which are disposed circumferentially at equi-angular intervals towards one end of the probe. Leads 32 pass from respective electrodes 31 to the free end of the probe and are connected to appropriate respective capacitance measuring circuits. In the present arrangement there are four electrodes disposed in mutually orthogonal planes but there could be any number of electrodes from three upwards. The capacitance between each individual electrode 31 and the adjacent surface of the cylinder can be measured with high precision and can give an accurate measure of the distance of the respective electrode from the surface. The information derived from the individual capacitance measurements pertaining to a single annulus of electrodes 31 depends upon the number of electrodes in that annulus. Thus two electrodes disposed $180^{\circ}$ apart can detect variations of overall bore diameter. Four electrodes disposed at $90^{\circ}$ intervals as shown can detect whether the bore is cylindrical or elliptical. And if there are six or more electrodes in the annulus, higher-order effects such as a lobed bore profile can be detected.

Figure 3 represents diagrammatically in cross-section the probe 30 which is of a certain diameter located within a bore 33 of larger diameter. The probe is shown to have four electrodes 31 located on diameter at right angles to each other. If the probe is off centre then there may be errors in measurement because the diameter of the bore is not being measured at the correct position. It will be appreciated from the diagram that the ratio of the two gaps which are measured by the capacitance $C_1$ and $C_2$ indicate whether the probe is centralised within the bore. If the gaps at $C_1$ and $C_2$ are not equal then the measured values of $C_3$ and $C_4$ will be greater than would be the case if probe 30 were concentric with bore 33 and the gaps as indicated by $C_3$ and $C_4$ will not be a true measure of the diameter of the bore at right angles to the line joining $C_1$ and $C_2$. A correction

therefore is necessary to the gaps as measured by $C_3$ and $C_4$. It will be readily understood that it is possible to calculate a correction to $C_3$ and $C_4$ if one knows the manner in which the capacity of each individual electrode varies with offset from the centre line. These calculations will not be simple if any degree of precision needs to be maintained, but once the relationship has been established, the appropriate parameters can be stored and used to modify the readings obtained from the probe to produce answers of any required precision. It is also apparent that both pairs of electrodes may be off centre, hence each pair will produce corrections for the other pair. The same would apply for any number of electrodes whose position is accurately known on the surface of the probe.

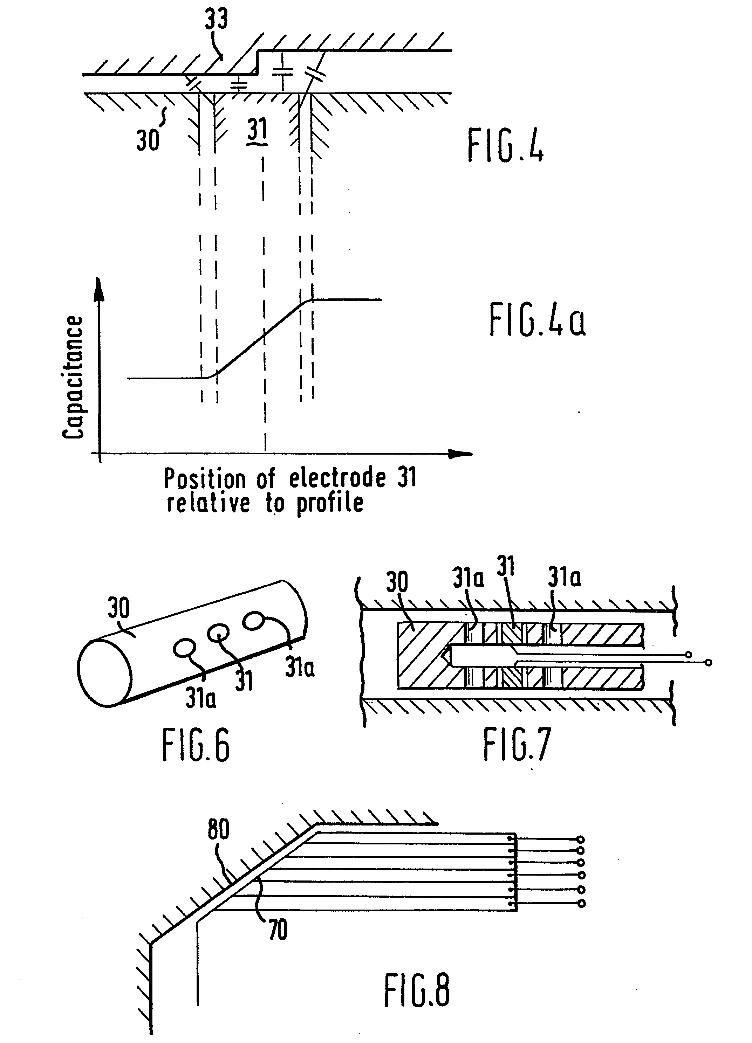

Figures 4 and 4a demonstrate the situation where an electrode 31 of finite size is used to measure a bore profile in which there is an abrupt step. It will be seen that the variation of capacitance between the electrode and the surface will not reflect exactly the nature of the step. It is possible to make a correction for the finite size of the electrode by applying a correction factor to the output of the device which measures the capacitance between the two surfaces. The correction required is a deconvolution similar to that which is used to correct finite sized optical gaps in interferometry. This correction also has to take into account the thickness and nature of any insulation between the electrode and the carrier. (There will be a further correction if the electrode is cylindrical and the step on the surface explored is linear.) There will be occasions when the probe must be traversed in two or three orthogonal planes in order to determine the exact profile of a surface in which the changes are smaller than the dimensions of the exploring electrode. The equation that represents the correction of the electrode may be stored in a computer that processes the output of the electrode and its signal conditioner in order to give a true profile measurement.

Furthermore, it may be desirable to have more than one annulus of electrodes disposed at spaced intervals along a cylindrical probe. In Figure 5a cylindrical probe body 40 made of conductive material has capacitative electrodes 41 disposed in two axially spaced annuli, there being four electrodes in each annulus connected in pairs each 180$^o$ apart. Each electrode is insulated from the probe body 40 by means of a zone of electrically insulating material 42 and leads 43 extend from the several electrodes 41 to the free end of the probe. By measuring the capacitance between the several electrodes 41 and the bore, it is possible to determine whether the axis of the probe coincides with the axis of the bore or whether it is misaligned. If there are three axially spaced annuli it becomes possible to detect whether the bore is straight or curved.

The cylindrical probe has the advantage that it can be made very compact and is useful as a free running probe typically 0.1 mm undersize for surface inspection of bores of small diameter.

Figures 6 and 7 show a sensor probe 30 which has electrodes 31 set into its surface for measuring the profile of another surface and also air vents 31a associated with the electrodes to either side thereof which allow a jet of air, nitrogen or other gas to be directed at the surface being measured in order to clean away from the surface any contamination such as oil or patches of dirt etc. It has long been known that one advantage of air gauging is that the surface measured is cleaned by the action of the air jet which is also making the measurement. In the present case the capacitative electrodes 31 measure the gaps between themselves and the surface under test with great sensitivity and stability and the air jets ensure that no contamination in the gaps between the electrodes and surface can modify the measurements. It will be appreciated that a variety of arrangements of the jet with relation to the measuring probe is possible eg. the electrode may be set in the centre of an air outlet so that a cleansing by the air is effective all around the sensitive area. Alternatively the air jet may be located in the centre of the electrode so that the emerging air blows away particles from the centre of the critical measuring area. There may be a variety of jets around the electrode together with slots or grooves in the electrode carrier which provide low impedance paths for the removal of oil, dirt, swarf, etc. In this way one has the advantage of the high sensitivity and stability of the electrical system and the scavenging or cleansing action of the air gauging system.

A further advantage of using these air jets is that they can provide a self centering action for the probe within a bore. Normally there will be an adequate clearance between the bore and the probe to allow easy insertion and for an adequate range of measurement.

However, if the probe sits to one side of the bore there may be errors of measurement introduced. By arranging several jets around the periphery of the probe inserted into the bore, a degree of self centering may be achieved in a manner which is familiar in the use of air bearings.

MEASUREMENT OF SURFACE IRREGULARITY BY A NEEDLE ARRAY

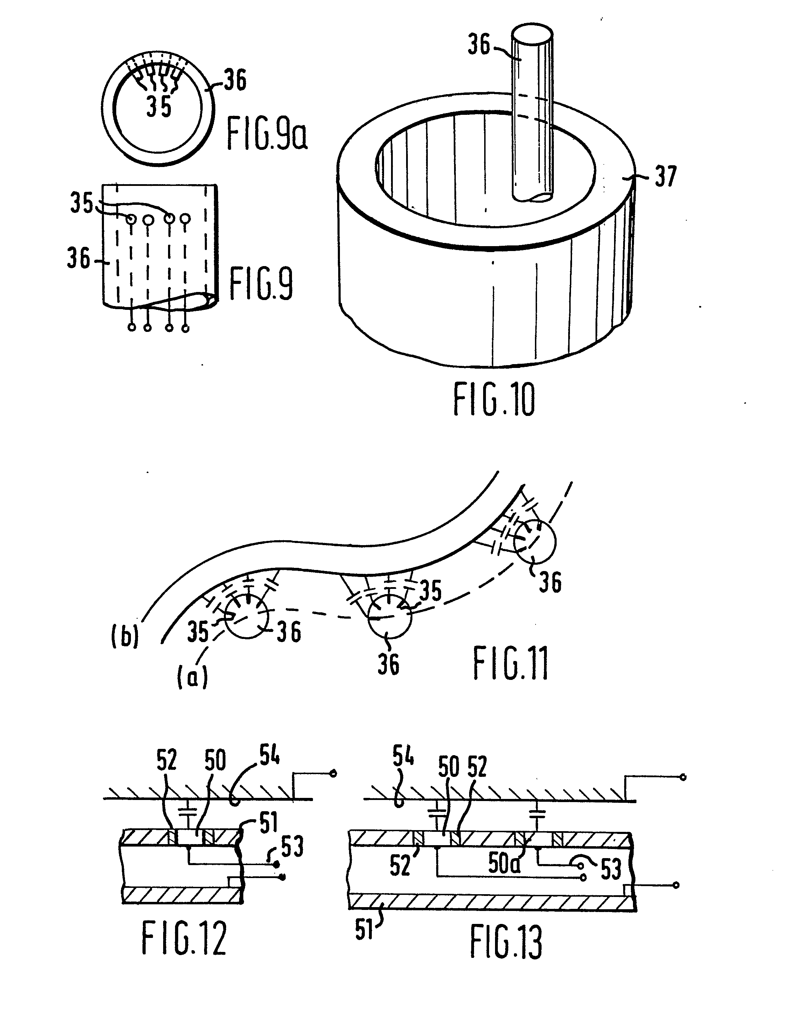

A similar arrangement is shown in Figure 8 in which a probe 70 has a linear or three dimensional array of electrode needles embedded in an insulating substrate with their tips ground to conform to the shape of a surface 80 to be tested. Individual electrical connection is made to each needle and the capacitance between each electrode and the test surface is measured. Variation in capacitance indicates variation in spacing between the needle tip and the surface being tested and hence measures surface irregularities.

The needles may be individual or grouped in bundles spaced apart from one another.

SCANNING A PROBE OVER A SURFACE

In Figures 9, 9a and 10 a relatively small probe which in this instance is of cylindrical form is being used to explore the surface of a relatively large object, in this instance a cylindrical bore whose internal diameter is considerably larger than the external diameter of the probe by being moved in a systematic pattern over the surface of the bore by means of a scanning mechanism (not shown). A simple probe having four electrode elements disposed equi-angularly in an annulus would not give the best result and it is better to group the capacitative electrodes 35 together in a limited arc of the surface of sensing probe 36 which is rotated about its own axis so as always to offer the same face to the surface 37 being explored. A greater degree of information about the curvature of the surface being explored can be obtained by having say three, four or five electrodes and monitoring the relative response of the individual elements as the probe is traversed around the surface. Similar considerations apply to a probe being traversed so as to explore a surface geometry in three dimensions (Figure 11).

The shape of a surface may also be measured by means of a probe having a single sensing electrode or a number of electrodes which is moved over the entire surface to be explored by means of a suitable servo mechanism which makes a systematic traverse over the surface. In the advantageous variant of this method only the direct capacitance between the sensing electrode and the surface is measured and the resulting distance information is fed back to the servo system which is arranged to maintain a constant spacing between the electrode and the surface. This is inherently a more accurate technique than allowing the spacing to vary. In Figure 12 a cylindrical probe has a single capacitative electrode 50 which may typically be 1 mm in diameter and is insulated from a conductive sleeve 51 by an insulating zone 52. A lead 53 extends from the electrode 50 to the free end of the probe and a surface 54 is scanned. During the scanning operation the electrode 50 should be maintained effectively normal to the adjoining region of the surface being scanned at a constant spacing therefrom of typically 0.1 mm and the associated servo mechanism may be arranged to rotate the probe to maintain it in the appropriate attitude as scanning proceeds. The arrangement of Figure 12 is similar except that there are two electrodes 50, 50a at axially spaced locations on the probe which permit the axis of the probe to be maintained parallel to the surface being scanned.

The above surface scanning technique may also be extended to the exploration of surfaces which are curved in two or three dimensions. Where more than one electrode is present on the probe, a compensation can be made for curvature of the surface under inspection. A single plain capacitance electrode which is 1 mm in diameter and set into a metal cylinder so that the electrode is insulated from the cylinder but flush with the surface, will exhibit a certain capacitance when at a certain distance from the plane surface, say for example 0.1 mm. If that surface was curved either in one or two dimensions and in a sense which is convex or concave, then the capacitance of that element will change since the gap between the electrode and the surface will no longer be constant. If however there are one or more adjacent electrodes, then the manner in which the capacitance from each of these elements to the surface explored varies will be an indication that curvature is present and a suitable compensation may be incorporated into the measuring system.

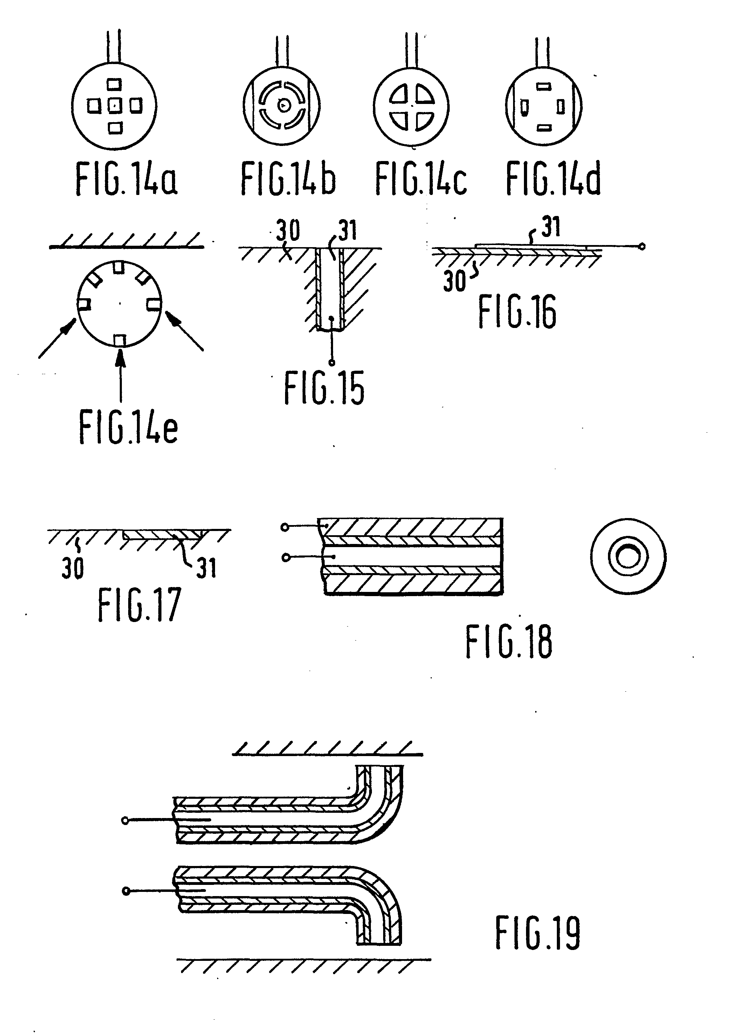

In Figures 14a-14d there is shown a generally spherical transducer probe with a multiplicity of capacitative electrodes disposed in a variety of patterns in a sector or face thereof. The spherical probe may be moved by an appropriate traversing mechanism so as to have the required number of degrees of freedom in rectangular or polar coordinates plus one or more rotational motions. For example a three dimensional measuring machine can be made to move the probe anywhere in its range of motion until the capacitance between one or more of the sensing elements and the surface reaches a predetermined value, after which the probe can be controlled by the three dimensional traversing mechanism to explore the surface at a constant spacing therefrom and build up a profile of that surface.

The last mentioned application will raise several interesting items of probe design. The probe will generally turn one face to the surface being sensed. The turning mechanism will be an auxiliary servo drive. However, it is desirable that the other faces should have sensing elements in case the probe enters an area too narrow, or approaches a sharp corner which will be sensed by the auxiliary electrode before the main electrodes. In Figure 14e the probe has three main surface sensing electrodes on one face thereof which in use is normally presented to the surface under test and auxiliary electrodes on other faces to warn of the approach of other obstacles. Another approach is to have equal sensitivity all round so that changes in profile are sensed by different electrodes. It will be appreciated that these remarks apply as much to three dimensional sensor elements.

In addition to these features there will be times when a curved surface is being scanned. The capacitance elements do not sense over zero area, and hence some errors in following may occur. Relative signals obtained from elements disposed around the surface may be used to correct for errors in following due to curvature.

DETAILS OF THE ELECTRODE CONSTRUCTION

Figure 15 shows a conducting electrode 31 set into a conductive carrier 30 and insulated therefrom by a layer of insulation. The electrode surface may be flush, protruding or set back from the surface of the carrier and the carrier 30 itself may be of any conducting material. In particular it may be convenient to use a material that can be moulded so that the electrode can be set in a carrier of complex shape which is formed by moulding a conductive material.

Figure 16 shows a thin film electrode 31 that is deposited on the surface of a carrier 30. The thin film may be a shaped piece of conductive material stuck on the surface or it can be deposited by evaporation or by electrochemical methods such as are used in fabrication of electrical components. The carrier surface on which the thin film electrodes are mounted may be either conducting or non-conducting. In the former case a layer of insulation may be used to isolate the film electrodes electrically which has the advantage that complex electrode patterns may be formed if required.

Figure 17 shows an electrode 31 diffused into a carrier surface 30 in the same way that the electrodes of semiconductors are diffused into silicon. It may be that if silicon is used then the electrodes diffused into the surface can become part of an active transistor network which will form part of an associated electronic detection and signal handling for the probe system. It will be appreciated that many semiconductor materials may be used other than silicon. It will also be appreciated that by forming the capacitive electrodes in this manner very fine electrode structures may be generated with consequent high resolution of measurement.

Figure 18 shows a cylindrical electrode set into an outer tubular screen and isolated with a layer of insulation. This construction has the advantage that very small electrode structures can be made eg. the diameter of the electrode could be 0.01 mm, the outer diameter including insulation electrode and screen could be less than 0.02 mm. This would allow very fine surface profile structures to be measured or alternatively for several electrodes to be grouped together in close proximity. The structure need not be small but could become a convenient way of mounting electrodes in a carrier for exploring surfaces. The method is convenient because tubular sections and round insulated wire are readily available. The section need not be circular; it could be rectangular or whatever shape is best suited for the measurement in hand.

Figure 19 shows two such electrodes, but mounted so that the gap between two surfaces may be explored. The surfaces may be a section of a small cylindrical hole or alternatively a parallel slot. If the electrodes are firmly mounted in a stable carrier, the profile of this inaccessible area may be gauged by measuring the capacitance between each electrode surface and the profile, calculating the gap, adding the distance between the two electrode surfaces which are determined by the setting of electrodes in the carrier, and the result will give distance apart of the two surfaces.

DETAILS OF THE ASSOCIATED CAPACITANCE MEASURING CIRCUITRY

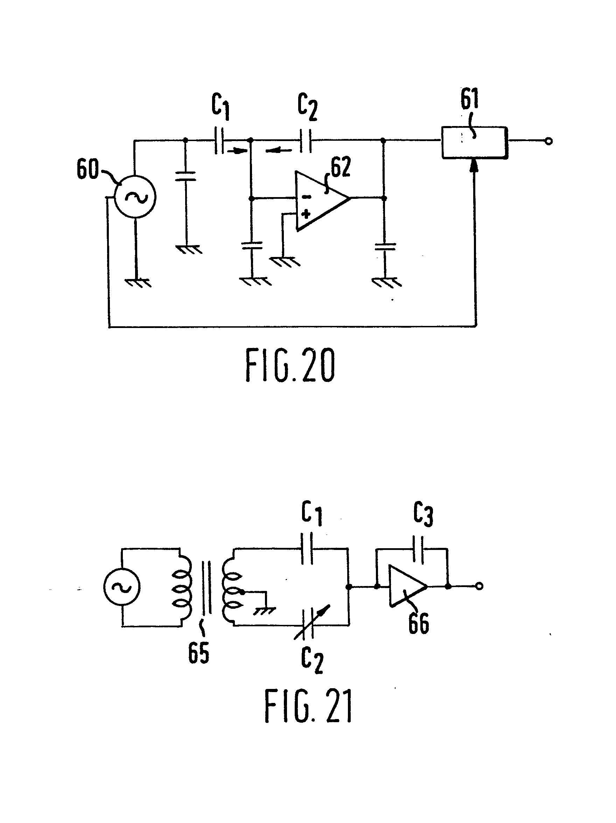

In Figure 20 there is shown a circuit for measuring the capacitance between a capacitative electrode and a probe. A carrier generator supplies an output to a demodulator 61 and another output to a probe electrode which forms one plate of capacitor $C_1$ which varies according to distance from the surface being measured. The other plate of capacitor $C_1$ is connected through fixed capacitor $C_2$ which is in parallel with high gain amplifier 62 to the demodulator 61 or phase sensitive detector. An output signal from the demodulator is proportional to $C_1/C_2$. In Figure 21 which shows another measuring circuit the carrier generator supplies an output to one side of transformer 65 the other winding of which is centre tapped to act as a potential divider and is connected to one plate of capacitor $C_1$ which represents the probe and to a variable capacitor $C_2$ so as to form a bridge circuit. The other plates of $C_1$ and $C_2$ supply an input to high gain amplifier 66 having parallel capacitor $C_3$. The value of

$C_2$ may be adjusted to balance the bridge and give a nil output and in this way the value of the probe capacitance $C_2$ can be determined.

CLAIMS:

1.   A non-contact method for measuring the dimensions and/or form of an unknown surface by means of a transducer or sensor probe presented to the surface and determining the variations in capacity or electrical flux between at least one discrete capacitance electrode in the transducer or sensor and the adjacent unknown surface wherein either sensor having one or more capacitance electrodes is scanned in two dimensions over the surface or a sensor having at least two electrodes is moved linearly passed the surface.

2.   A method according to claim 1, wherein the surface being measured is the interior of a bore and the probe is of cylindrical form and is of slightly smaller diameter than the bore and has one or more capacitative electrodes in its outer surface.

3.   A method according to claim 2, which comprises measuring the capacity between the interior of the bore and two or more capacitative electrodes circumferentially spaced at equi-angular intervals in an annulus on said probe or in two or more axially spaced annuli on said probe.

4.   A method according to claim 1, 2 or 3, wherein the body of the probe is conducting and has conductive electrodes set into it and insulated from the probe body by regions of insulating material.

5.   A method according to claim 1, wherein the surface being measured is the interior of a bore or another surface curved in two or three dimensions and the probe is substantially smaller than the diameter of the bore or the radius of curvature of the surface and is traversed over the surface.

6.    A method according to claim 5, wherein one or more sensing electrodes is grouped in a limited sector of the probe, and the probe is rotated as it is scanned so as always to present the same face to the surface being scanned.

7.    A method according to claim 5 or 6, wherein the probe is generally cylindrical.

8.´    A method according to claim 5 or 6, wherein the probe is generally spherical.

9.    A method according to any of claims 5 to 8, wherein the probe is moved so as to maintain a constant spacing from the surface being scanned.

10.    A method according to claim 1, wherein the probe is in the form of a three dimensional electrode array conforming to the surface being scanned.

11.    A method according to claim 10, wherein the probe includes electrode needles insulated from one another with their tips ground to the shape of the surface being explored.

0067643

1/5

FIG.1

FIG.1a

FIG.2

FIG.3

FIG.5

0067643

FIG.4

FIG.4a

Capacitance

Position of electrode 31
relative to profile

FIG.6

FIG.7

FIG.8

FIG.9a

FIG.9

FIG.10

FIG.11

FIG.12

FIG.13

FIG.14a    FIG.14b    FIG.14c    FIG.14d

FIG.14e

30    31

FIG.15

31

30

FIG.16

30    31

FIG.17

FIG.18

FIG.19

FIG.20

FIG. 21